# FASCICULE DE BREVET EUROPEEN

(11) **EP 1 614 352 B1**
(45) Date de publication et mention de la délivrance du brevet: **12.03.2008**
(21) Numéro de dépôt: 05291477.7
(22) Date de dépôt: 07.07.2005
(51) Int. Cl.: A21C 1/14, B01F 7/16, B01F 15/00, B01F 15/06

(54) **Dispositif de mélange en continu d'une pâte alimentaire comprenant un outil de mélange centrifuge et une évacuation latérale, procédé et installation.**
Kontinuierliche Mischvorrichtung für Teigmittel mit einem Zentrifugalmischwerkzeug und einem Seitenauslass, Verfahren und Anlage
Continuous mixing apparatus for food dough comprising a centrifugal mixing tool and a lateral outlet, method and installation

(30) Priorité: 08.07.2004 FR 0407657
(43) Date de publication de la demande: 11.01.2006
(73) Titulaire: VMI, 85600 Montaigu (FR)
(72) Inventeur: Fisson, Gérard, 85600 Saint-Hilaire de Loulay (FR); Jaunet, Laurent, 85600 Saint-Hilaire de Loulay (FR); Vannier, Guillaume, 44100 Nantes (FR)
(74) Mandataire: Bredema

(56) Documents cités:
- US-A- 3 630 492
- US-A- 3 923 289
- US-A- 4 529 321

## Description

L'invention concerne un dispositif de mélange en continu des ingrédients d'une pâte alimentaire à base de farine et d'eau, un procédé de fabrication d'une telle pâte prévoyant de mélanger en continu les ingrédients au moyen d'un tel dispositif ainsi qu'une installation pour la mise en oeuvre d'un tel procédé.

Le dispositif de mélange selon l'invention est destiné en particulier à fraser la pâte alimentaire préalablement à son pétrissage. Un tel dispositif trouve ses applications notamment dans des installations de fabrication d'une pâte alimentaire à base de farine et d'eau de manière continue, lorsque la pâte mélangée est pétrie en continu, ou discontinue, lorsque la pâte mélangée est recueillie avant d'être pétrie.

On connaît des dispositifs de mélange comprenant une chambre de mélange des différents ingrédients, notamment l'eau et la farine, et une chambre d'évacuation en continu de la pâte mélangée dans une cuve de pétrissage. La chambre de mélange est pourvue d'un outil de mélange actionné par des premiers moyens de motorisation. Par ailleurs, un outil d'évacuation en continu s'étend entre la chambre de mélange et la chambre d'évacuation de sorte à faire avancer en continu le mélange formé dans la chambre de mélange jusqu'à une ouverture de sortie prévue sur la chambre d'évacuation. Cet outil d'évacuation est actionné par des deuxièmes moyens de motorisation distincts des premiers.

Un problème de ce type de dispositif est que sa structure est complexe du fait qu'il nécessite l'utilisation de deux moyens de motorisation distincts et de deux outils distincts. En particulier, l'utilisation de deux outils avec leur moyen de motorisation propre nécessite un agencement particulier et complexe pour éviter les interactions entre les outils et/ou avec les moyens assurant la transmission des couples de rotation entre l'outil et ses moyens de motorisation. Par ailleurs, les procédures de maintenance, et notamment de nettoyage, du dispositif de mélange ne sont pas optimales.

En outre, du fait de cette structure complexe, un tel dispositif présente un poids et un encombrement importants ce qui pose des problèmes notamment lors de l'intégration du dispositif dans une installation de fabrication de pâte alimentaire.

Le document US-A-3 923 289 décrit un dispositif selon le préambule de la revendication 1.

L'invention vise à résoudre ces problèmes en prévoyant une structure de dispositif de mélange qui permette avec un seul outil le mélange des ingrédients et l'évacuation de la pâte mélangée.

A cet effet, et selon un premier aspect, l'invention concerne un dispositif de mélange en continu des ingrédients d'une pâte alimentaire à base de farine et d'eau selon la revendication 1.

Ainsi, en prévoyant un mélange centrifuge de la pâte qui est combiné avec une d'évacuation latérale, le dispositif permet à l'outil d'assurer à la fois un mélange optimal et une évacuation de la pâte mélangée.

Selon un deuxième aspect, l'invention concerne un procédé de fabrication d'une pâte alimentaire à base de farine et d'eau selon la revendication 18, ledit procédé prévoyant de mélanger en continu les ingrédients de ladite pâte au moyen d'un dispositif de mélange selon le premier aspect, puis de pétrir ladite pâte qui est évacuée du dispositif.

Selon un troisième aspect, l'invention a pour objet une installation selon la revendication 21 pour la mise en oeuvre d'un tel procédé, comprenant un dispositif de mélange selon le premier aspect, et une cuve de pétrissage dans laquelle sont disposés des outils de pétrissage, ladite cuve comprenant un orifice amont d'alimentation du mélange à pétrir qui est en communication avec, ou disposé en regard de, l'orifice d'évacuation, et un orifice aval de sortie de la pâte pétrie, ladite cuve étant agencée pour, lors de l'alimentation en continu de la cuve avec le mélange évacuée du dispositif de mélange, permettre le déplacement de la pâte dans la cuve depuis l'orifice amont vers l'orifice aval.

D'autres objets et avantages de l'invention apparaîtront au cours de la description qui suit, faite en référence aux dessins annexés dans lesquels :

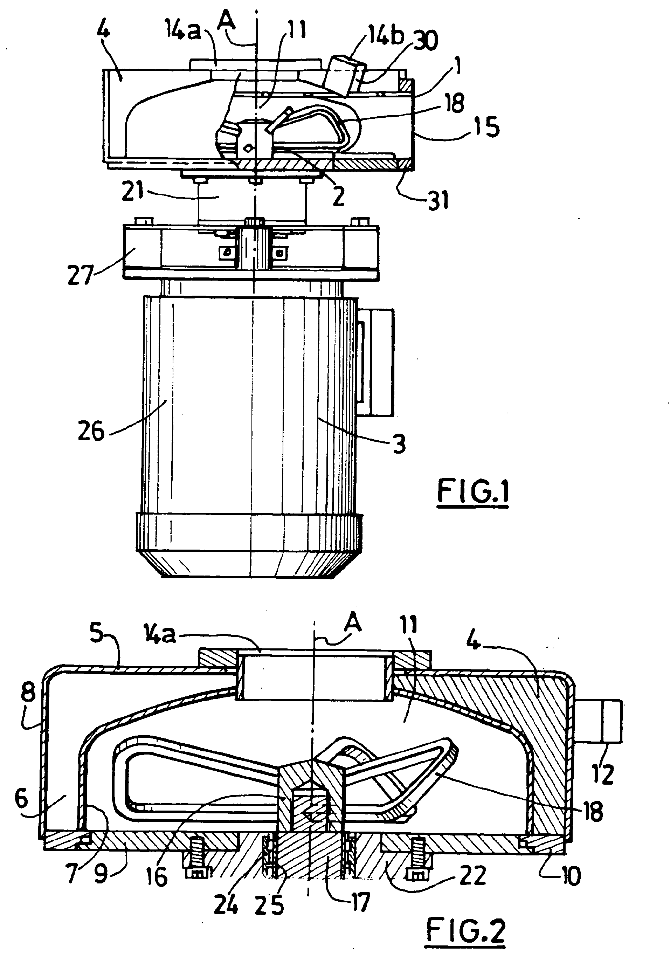

- la figure 1 est une vue en plan d'un dispositif de mélange selon un premier mode de réalisation, ledit dispositif comprenant une enceinte représentée en coupe partielle à l'intérieure de laquelle un outil est monté en rotation, ladite enceinte comprenant un orifice central d'alimentation en ingrédients solides, trois orifices supérieurs d'alimentation en liquide et un orifice latéral d'évacuation de la pâte mélangée, l'évacuation étant tangentielle ;
- la figure 2 est une vue partielle en coupe longitudinale du dispositif de la figure 1 représentant l'enceinte du dispositif, ladite enceinte définissant un espace de mélange dans lequel l'outil de mélange est monté en rotation ;
- la figure 3 est une vue partielle de dessus en plan du dispositif de la figure 1, dans laquelle on représente les orifices d'alimentation en liquide, l'orifice d'évacuation et, par transparence de la paroi supérieure de l'enceinte, l'outil dans l'espace de mélange et son sens de rotation, les orifices d'alimentation étant disposés, par rapport au sens de rotation de l'outil de mélange, en avant de l'orifice d'évacuation ;
- la figure 4 est une vue partielle de dessus en coupe transversale du dispositif de la figure 1 représentant la disposition tangentielle de l'orifice d'évacuation ;
- les figures 5 et 6 sont des figures analogues respectivement aux figures 3 et 4 représentant un dispositif de mélange selon un deuxième mode de réalisation dans lequel l'évacuation de la pâte mélangée est radiale ;
- les figures 7 sont des représentations de l'outil de mélange selon un mode de réalisation dans lequel l'outil comprend trois pales équiréparties ;
- la figure 8 est une représentation schématique d'une installation de fabrication en continu d'une pâte alimentaire à base de farine et d'eau comprenant un dispositif de mélange selon la figure 1.

Sur les figures, on représente un dispositif de mélange en continu des ingrédients d'une pâte alimentaire à base de farine et d'eau.

Le terme pâte alimentaire à base de farine et d'eau peut désigner tout mélange comprenant de l'eau et de la farine dans des proportions adaptées au type de pâte alimentaire souhaitée. Celle-ci peut être plus ou moins fluide, plus ou moins visqueuse. En particulier, le terme pâte alimentaire peut désigner le levain liquide.

Le dispositif permet en particulier de fraser la pâte préalablement à son pétrissage. Toutefois, compte tenu de la qualité du mélange obtenu avec le dispositif suivant l'invention, la pâte mélangée peut, dans certaines applications, être utilisée sans pétrissage ultérieur.

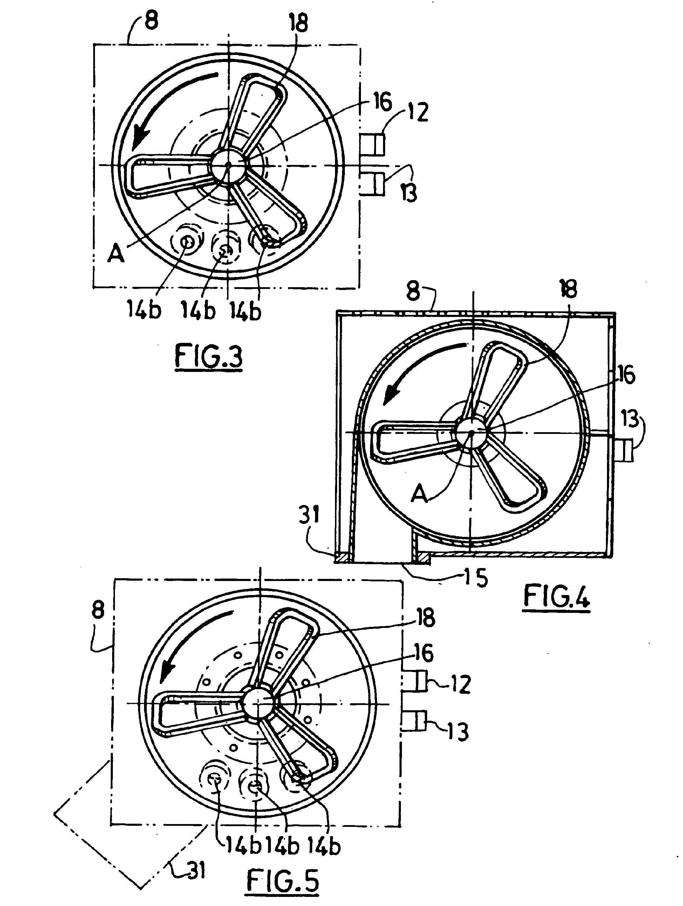

Le dispositif comprend une enceinte de mélange 1 à l'intérieure de laquelle un outil de mélange 2 est monté en rotation autour d'un axe A. Le dispositif comprend également des moyens de motorisation 3 pour entraîner l'outil 2 en rotation selon un sens de mélange matérialisé sur les figures 3 à 6 par une flèche orientée dans le sens anti-horaire.

Dans la suite de la description, les termes « axial » ou « longitudinal » et « radial » ou « transversal » font référence à des plans respectivement parallèle et perpendiculaire à l'axe A.

L'enceinte de mélange 1 est de forme générale cylindrique et est disposée coaxialement à l'axe A. L'enceinte 1 comprend une cloche 4 formée d'une paroi supérieure 5, dont la surface externe est sensiblement plane et la surface interne est sensiblement sphérique, et d'une jupe 6 latérale s'étendant verticalement depuis la périphérie de la paroi supérieure 5. La jupe 6 comprend un bord interne 7 sensiblement cylindrique de section circulaire et un bord externe 8 sensiblement cylindrique de section polygonale, notamment carrée sur les figure, ou circulaire. Du côté opposé à celui de la paroi supérieure 5, la jupe est associée de façon étanche sur un support 9 de forme générale plane. Par exemple, une pièce annulaire 10 disposée autour du support 9 permet d'une part d'associer le support 9 et la cloche 4 et d'autre part d'assurer l'étanchéité de l'enceinte 1. On peut également prévoir de disposer des joints d'étanchéité supplémentaires entre la pièce annulaire 10 et le support 9 et/ou entre la cloche 4 et la pièce annulaire 10.

La surface interne de la paroi supérieure 5, le bord cylindrique 7 et la surface supérieure sensiblement plane du support 9 définissent un espace de mélange 11 dans lequel est disposé l'outil de mélange 2 et présentant une section transversale circulaire de rayon R. Dans un exemple particulier, la valeur du rayon R peut être comprise entre 20 cm et 70 cm.

L'enceinte 1 peut intégrer des dispositifs utilisés dans la préparation d'une pâte alimentaire à base de farine et d'eau. De tels dispositifs permettent, par exemple, de contrôler les conditions dans lesquelles les ingrédients sont mélangés. Il peut s'agir notamment d'un dispositif de refroidissement. L'enceinte 1 comprend alors une chambre de circulation d'un fluide de refroidissement, tel que du glycol, entre un port amont 12 et un port aval 13 prévus sur le bord externe 8 de la jupe 6. Dans le mode de réalisation représenté, les ports amont 12 et aval 13 sont situés à proximité l'un de l'autre, de part et d'autre du plan médian longitudinal et du plan médian transversal et sont décalés longitudinalement et transversalement l'un par rapport à l'autre.

En variante éventuellement complémentaire, l'enceinte 1 peut intégrer un dispositif de chauffage et comprendre plusieurs chambres de circulation entre des ports amont et aval.

Les ingrédients introduits dans l'espace de mélange 11 sont mélangés par l'outil de mélange 2 entre des orifices d'alimentation 14 en ingrédients et un orifice 15 prévu dans la partie latérale de la périphérie de l'espace de mélange 11, par exemple réalisé dans le bord cylindrique 7 et traversant la jupe 6, et permettant l'évacuation de la pâte mélangée.

Pour ce faire, l'outil de mélange 2 disposé à l'intérieur de l'enceinte 1 comprend un moyeu 16 d'association à un arbre moteur 17 et un ou plusieurs bras 18 s'étendant radialement depuis le moyeu 16. Chaque bras 18 est incliné, par rapport au sens de mélange, vers l'avant de sorte à présenter une surface d'attaque de la pâte dont la normale est orientée vers le fond de l'espace de mélange 11.

Les choix du nombre de bras 18, de leur forme et de l'inclinaison de la surface d'attaque permettent d'adapter le dispositif au type de pâte mélangée souhaité.

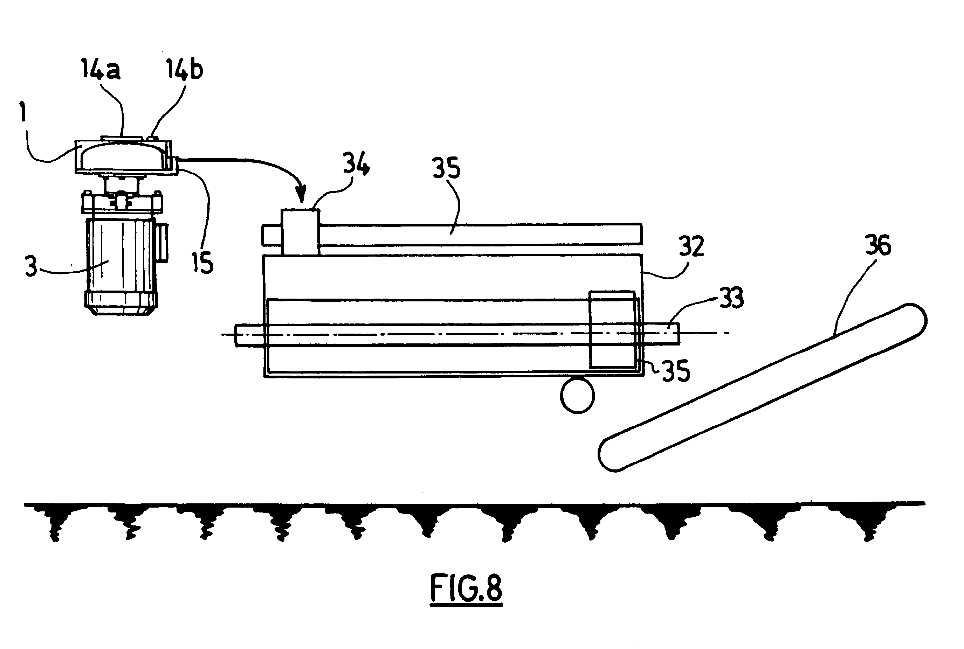

En particulier, selon une réalisation, l'outil 2 comprend trois bras 18 identiques équirépartis autour du moyeu 16 avec un écart angulaire égal à 120° (figure 8a). Cette disposition offre l'avantage de présenter une meilleure stabilité lors de la rotation de l'outil 2.

Chaque bras 18 comprend un tube en forme de U et de section polygonale, notamment carrée ou triangulaire, ou circulaire (figure 8c). La base 19 du U est disposée en regard du bord interne latéral 7 de sorte que les branches 20 soient disposées l'une au dessus de l'autre et forment la surface d'attaque de la pâte. Les deux branches 20 du U sont associées au moyeu 16 de sorte que la branche 20 supérieure soit disposée, par rapport au sens de mélange, devant la branche 20 inférieure (figure 8b). Par exemple, l'angle entre la normale de la surface d'attaque et l'axe de rotation A est de l'ordre de 45°.

Par ailleurs, la longueur de chaque bras 18 est comprise entre 70% et 90% de la valeur du rayon R de l'espace de mélange 11. L'outil 2 est disposé en regard et à distance de la surface supérieure du support 9 de sorte que la distance entre l'extrémité inférieure du bras 18 et le support 9 soit inférieure à la distance entre l'extrémité radiale du bras 18 et le bord interne cylindrique 7.

Ainsi, dans cette réalisation particulière, lors de la rotation de l'outil 2, le travail de la pâte alimentaire combine du cisaillement, du roulement sur le bord interne 7, du plaquage sur la surface supérieure du support 9 et de la centrifugation.

Pour assurer la rotation de l'outil de mélange 2, les moyens de motorisation 3 peuvent comprendre un ou plusieurs moteurs entraînant en rotation l'arbre moteur 17 auquel l'outil de mélange 2 est associé. On peut, par ailleurs, prévoir que les moyens de motorisation 3 disposent de régulateurs permettant d'adapter la vitesse de rotation, par exemple, au type de mélange ou au débit de sortie souhaités. Dans un exemple particulier, les moyens de motorisation 3 entraînent l'outil 2 à une vitesse de rotation de l'ordre de 750 tours par minute. La durée durant laquelle la pâte est mélangée en circuit fermé par l'outil 2 est alors de l'ordre d'une vingtaine de seconde.

Le travail de la pâte alimentaire obtenu par l'outil 2 selon l'invention à une telle vitesse de rotation permet d'améliorer la qualité du mélange et d'obtenir un premier pétrissage de la pâte mélangée avant même son introduction dans une cuve de pétrissage.

Par ailleurs, l'outil 2 est monté en rotation par rapport à l'enceinte 1 au moyen d'un dispositif de guidage et d'étanchéité 21 fixé au support (figure 3). Un tel dispositif 21 est par exemple décrit dans le document FR-A-2 814 514 issu de la demanderesse. Il comprend un corps 22, des roulements interposés entre le corps 22 et l'arbre moteur 17 et des moyens d'étanchéité 24 tels que des joints. Un tel dispositif est solidarisé sur l'arbre moteur 17 de manière amovible au moyen d'une chemise 25 de sorte à permettre la réparation ou le remplacement rapide des pièces composant le dispositif 21 sans démontage de l'arbre moteur 17.

Le dispositif de guidage et d'étanchéité 21 est monté entre le support 9 de l'enceinte 1 et un boîtier 26 enfermant les moyens de motorisation 3 par l'intermédiaire de quatre joints 27 verticaux.

En amont du dispositif de mélange, préalablement à leur introduction dans l'espace de mélange 11, les ingrédients à mélanger pour obtenir le type de pâte alimentaire souhaité sont dosés selon les proportions requises. Ces ingrédients comprennent notamment de la farine, de l'eau et d'autres éléments utilisés en boulangerie, par exemple de l'huile, du levain ou des améliorants tel que l'acide ascorbique.

L'acheminement en continu vers le dispositif de mélange des ingrédients est réalisé par des moyens d'amenée et d'alimentation en continu, non représentés sur les figures. Les moyens d'amenée peuvent se présenter sous la forme de conduits de section sensiblement circulaire ou sensiblement rectangulaire réalisés en matériau flexible ou rigide ou une combinaison des deux.

Les moyens d'amenées sont raccordés aux orifices d'alimentation 14 en ingrédients prévus sur la paroi supérieure 5 de l'enceinte 1 pour permettre l'introduction en continu dans l'espace de mélange 11 des ingrédients de la pâte alimentaire. Selon l'invention, les orifices 14 sont différents selon la nature de l'ingrédient. On distingue ainsi :
- le ou les orifice(s) d'alimentation 14a de l'espace 11 en ingrédients solides ;
- le ou les orifice(s) d'alimentation 14b de l'espace 11 en liquide.

Sur les figures, le dispositif comprend un orifice d'alimentation en ingrédients solides 14a agencé sensiblement coaxialement à l'axe A de rotation de l'outil de mélange 2. Ainsi, les ingrédients solides sont introduits axialement dans l'espace de mélange 11 au niveau du moyeu de l'outil 16. L'orifice d'alimentation en ingrédients solides 14a peut être utilisé pour l'introduction dans le dispositif de mélange d'autres types d'ingrédients solides n'entrant pas directement dans la composition de la pâte alimentaire proprement dite. Ces ingrédients peuvent être de natures et de formes diverses. A titre d'exemple, ces ingrédients peuvent être du chocolat, en pépites ou fondu, des fruits secs, etc.

Par ailleurs, le dispositif comprend également trois orifices d'alimentation en liquide 14b. Ces orifices 14b reliés au moyens d'amenée permettent l'introduction d'un liquide, et notamment de l'eau, à l'intérieur de l'enceinte.

Les orifices d'alimentation en liquide 14b sont disposés, par rapport au sens de mélange, en avant de l'orifice d'évacuation 15. Ainsi, avec un tel agencement, la pâte effectue sensiblement un tour complet de l'espace de mélange 11 entre le moment où les ingrédients entrent en contact les uns avec les autres et celui où la pâte mélangée est évacuée de l'espace 11. La distance et la durée de mélange sont maximales de sorte à améliorer la qualité de la pâte mélangée obtenue.

De plus, les orifices d'alimentation en liquide 14b sont excentrés radialement par rapport à l'axe A. Par exemple, ils sont prévus à une distance de l'axe A qui est comprise entre 40% et 70% du rayon R de l'espace de mélange 11. Sur les figures, les orifices d'alimentation en liquide 14b sont situés sur un arc cercle dont le rayon est supérieur à la moitié du rayon R de l'espace 11 et sont disposés au voisinage les uns des autres de sorte à être sensiblement alignés. Cet agencement des orifices 14b permet d'une part d'éviter les risques de bouchage et de blocage de l'orifice d'alimentation en ingrédients solides 14a si l'alimentation en liquide était réalisée à proximité de l'axe A et d'autre part d'homogénéiser le mélange et de limiter les quantités de fluides non mélangés aux ingrédients solides si l'alimentation en liquide était réalisée à proximité du bord interne 7 de la jupe 6.

Dans l'exemple considéré, on prévoit que l'orifice d'alimentation en liquide 14b le plus proche de l'orifice d'évacuation 15 permet l'introduction de levain liquide, l'orifice d'alimentation 14b le plus éloigné de l'orifice d'évacuation 15 permet l'introduction d'huile et l'orifice d'alimentation 14b central permet l'introduction d'eau.

Pour assurer un mouillage satisfaisant et homogène de l'ensemble des ingrédients solides présents dans l'espace de mélange, au moins l'orifice d'alimentation en eau 14b est pourvu d'une buse 30 agencée pour permettre l'introduction du liquide, par exemple, selon un cône sensiblement plein ou un rideau. Les liquides sont injectés en fines gouttelettes à basse pression de sorte à former un brouillard permettant le mouillage sensiblement instantané des ingrédients solides.

L'évacuation de la pâte mélangée est réalisée par l'orifice d'évacuation 15 pourvu d'un conduit 31. La sortie de la pâte mélangée est réalisée d'une part par l'effet centrifuge dû à la rotation de l'outil 2 à l'intérieur de l'enceinte 1 et d'autre part par cisaillement contre le bord du conduit 31 situé en avant par rapport au sens de rotation de l'outil 2.

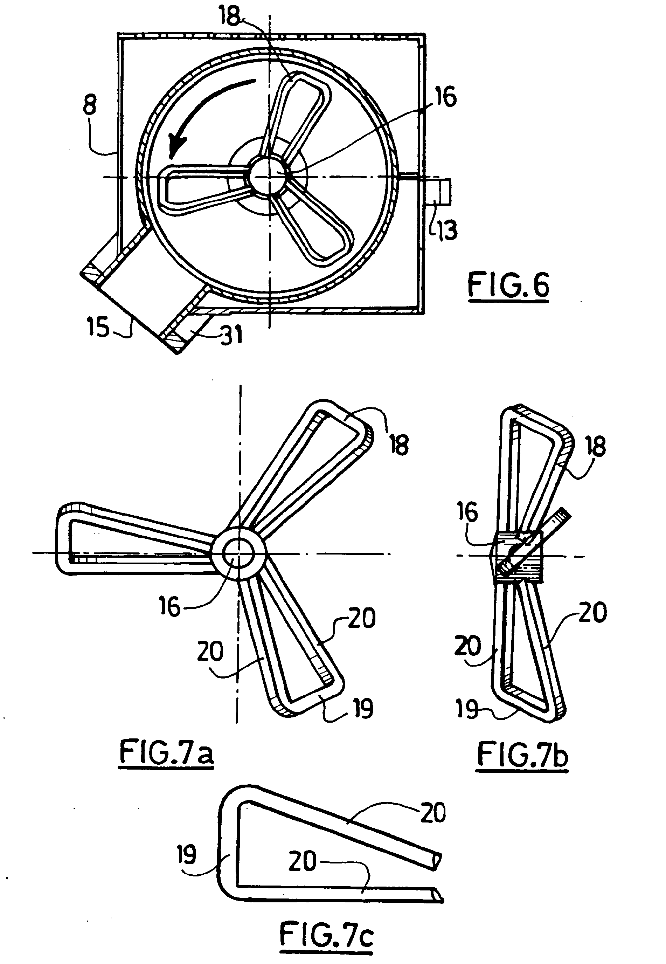

Le conduit 31 peut être agencé pour former un angle compris entre 0° et 90° par rapport à un rayon de l'espace de mélange 11. Sur les figures 4 et 5 d'une part et 6 et 7 d'autre part, on représente deux modes de réalisation de l'évacuation de la pâte mélangée. Selon le premier mode de réalisation représenté sur les figures 4 et 5, l'angle est égal à sensiblement 90° de sorte à assurer une évacuation tangentielle de la pâte mélangée. Selon le deuxième mode de réalisation représenté sur les figures 6 et 7, l'angle est égal à sensiblement 0° de sorte à assurer une évacuation radiale de la pâte mélangée.

Afin de faciliter la maintenance et le nettoyage de l'enceinte 1 ou de contrôler l'alimentation en ingrédients et l'évacuation de la pâte mélangée, on peut prévoir que les différents orifices 14, 15 soient pourvus d'une vanne d'isolation non représentée, et notamment d'une vanne à manchon.

Le dispositif de mélange tel qu'il vient d'être décrit peut indifféremment être utilisé dans une installation de fabrication de manière discontinue ou continue d'une pâte alimentaire à base de farine et d'eau.

Pour une installation dans laquelle la pâte alimentaire à base de farine et d'eau est fabriquée de manière discontinue, on met en oeuvre un procédé dans lequel les ingrédients de la pâte alimentaire sont mélangés en continu dans le dispositif de mélange, la pâte mélangée évacuée du dispositif est ensuite recueillie avant d'être pétrie dans une cuve de pétrissage.

Pour une installation dans laquelle la pâte alimentaire à base de farine et d'eau est fabriquée de manière continue, on met en oeuvre un procédé dans lequel les ingrédients de la pâte alimentaire sont mélangés en continu dans le dispositif de mélange, la pâte mélangée évacuée du dispositif est pétrie en continu dans une cuve de pétrissage.

Pour ce faire, cette dernière installation, représentée sur la figure 9, comprend le dispositif de mélange et une cuve de pétrissage 32 dans laquelle sont disposés des outils de pétrissage 33 au voisinage du fond de la cuve. Le dispositif de mélange et la cuve de pétrissage 32 sont montés sur un châssis non représenté.

La cuve 32 comprend une première et une deuxième parois latérales sensiblement verticales reliées par le fond de la cuve. L'ouverture de la cuve 32 peut être recouverte par un couvercle 35 monté de manière amovible sur la cuve 32. La cuve 32 comprend, sur sa partie supérieure, un orifice amont 34 d'alimentation de la pâte mélangée à pétrir. L'orifice amont 34 est en communication avec l'orifice d'évacuation 15 du dispositif de mélange, par exemple au moyen de deuxièmes moyens d'amenée pouvant se présenter sous la forme de conduits de section sensiblement circulaire ou rectangulaire réalisés en matériau flexible ou rigide ou une combinaison des deux. On peut également prévoir que l'orifice amont 34 de la cuve 32 soit disposé en regard de l'orifice d'évacuation 15.

La cuve 32 est agencée pour, lors de l'alimentation en continu de la cuve 32 avec la pâte mélangée issue du dispositif de mélange, permettre le déplacement de la pâte mélangée dans la cuve 32 depuis l'orifice amont 34 et un orifice aval 35 de sortie de la pâte pétrie. L'orifice aval 35 est situé sur une face latérale de la cuve 32 et placé à une distance prédéterminée d'un dispositif de récupération 36, tel qu'un tapis sans fin, de la pâte pétrie en sortie de la cuve 32.

## Revendications

1. Dispositif de mélange en continu des ingrédients d'une pâte alimentaire à base de farine et d'eau, ledit dispositif comprenant une enceinte (1) définissant un espace de mélange (11) présentant une section transversale circulaire de rayon R, dans lequel un outil de mélange (2) comprenant au moins un bras (18) radial est monté en rotation autour d'un axe (A), et des moyens de motorisation (3) entraînant en rotation ledit outil selon un sens de mélange, l'enceinte (1) comprenant au moins les trois types d'orifice suivants :
- un orifice d'alimentation (14a) de l'espace (11) en ingrédients solides ;
- un orifice d'alimentation (14b) de l'espace (11) en liquide ;
- un orifice d'évacuation (15) de la pâte mélangée, ledit orifice étant prévu dans la partie latérale de la périphérie de l'espace de mélange (11) **caractérisé en ce que** le bras (18) est incliné, par rapport au sens de mélange, vers l'avant de sorte à présenter une surface d'attaque de la pâte dont la normale est orientée vers le fond de l'espace de mélange (11).

2. Dispositif de mélange selon la revendication 1, **caractérisé en ce que** les orifices d'alimentation (14) sont prévus sur la paroi supérieure (5) de l'enceinte (1), l'orifice d'alimentation en ingrédients solides (14a) étant sensiblement coaxial à l'axe (A) de rotation de l'outil et l'orifice d'alimentation en liquide (14b) étant excentré radialement par rapport audit axe.

3. Dispositif de mélange selon la revendication 2, **caractérisé en ce que** l'orifice d'alimentation en liquide (14b) est prévu à une distance de l'axe (A) de rotation qui est comprise entre 40% et 60% du rayon R de l'espace de mélange (11).

4. Dispositif de mélange selon l'une quelconque des revendications 1 à 3, **caractérisé en ce que** l'orifice d'alimentation en liquide (14b) est disposé, par rapport au sens de mélange, en avant de l'orifice d'évacuation (15).

5. Dispositif de mélange selon l'une quelconque des revendications 1 à 4, **caractérisé en ce que** l'orifice d'alimentation en liquide (14b) est pourvu d'une buse (30) qui est agencée pour permettre l'introduction du liquide dans l'espace de mélange (11) selon un cône sensiblement plein.

6. Dispositif de mélange selon l'une quelconque des revendications 1 à 5, **caractérisé en ce que** l'orifice d'évacuation (15) est pourvu d'un conduit (31) qui est agencé pour former un angle compris entre 0° et 90° par rapport à un rayon de l'espace de mélange (11).

7. Dispositif de mélange selon la revendication 6, **caractérisé en ce que** l'angle est égal à sensiblement 0° de sorte à assurer une évacuation radiale de la pâte mélangée.

8. Dispositif de mélange selon la revendication 6, **caractérisé en ce que** l'angle est égal à sensiblement 90° de sorte à assurer une évacuation tangentielle de la pâte mélangée.

9. Dispositif de mélange selon l'une quelconque des revendications 1 à 8, **caractérisé en ce que** l'enceinte (1) comprend une cloche (4) à bord interne (7) latéral sensiblement cylindrique qui est associée de façon étanche sur un support (9), l'orifice d'évacuation (15) étant réalisé dans le bord cylindrique (7).

10. Dispositif de mélange selon la revendication 9, **caractérisé en ce que** le support (9) présente une surface supérieure qui est sensiblement plane, en regard et à distance de laquelle l'outil (2) est disposé.

11. Dispositif de mélange selon la revendication 10, **caractérisé en ce que** la distance entre l'extrémité inférieure du bras (18) et le support (9) est inférieure à la distance entre l'extrémité radiale du bras (18) et le bord cylindrique (7).

12. Dispositif de mélange selon l'une quelconque des revendications 1 à 11, **caractérisé en ce que** la longueur du bras (18) de l'outil (2) est comprise entre 70% et 90% de la valeur du rayon de l'espace de mélange (11).

13. Dispositif de mélange selon la revendication 1, **caractérisé en ce que** l'angle entre la normale de la surface d'attaque et l'axe (A) de rotation est de l'ordre de 45°.

14. Dispositif de mélange selon l'une quelconque des revendications 1 à 13 **caractérisé en ce que** l'outil (2) comprend un moyeu (16) d'association au moteur, trois bras (18) identiques s'étendant radialement depuis ledit moyeu, les bras (18) étant équirépartis autour du moyeu (16) avec un écart angulaire égal à 120°.

15. Dispositif de mélange selon la revendication 14 **caractérisé en ce que** chaque bras (18) comprend un tube en forme de U, les deux branches (20) du U étant associées au moyeu (16) de sorte que la branche (20) supérieure du U soit disposée, par rapport au sens de mélange, devant la branche (20) inférieure du U, la surface d'attaque de la pâte étant formée entre lesdites branches.

16. Dispositif selon l'une quelconque des revendications 1 à 15, **caractérisé en ce que** l'enceinte (1) comprend au moins une chambre de circulation d'un fluide entre un port amont (12) et un port aval (13), lesdits ports étant prévus sur la paroi extérieure (8) de ladite enceinte.

17. Dispositif selon l'une quelconque des revendications 1 à 16, **caractérisé en ce qu**'au moins un orifice (14, 15) est pourvu d'une vanne.

18. Procédé de fabrication d'une pâte alimentaire à base de farine et d'eau, ledit procédé prévoyant de mélanger en continu les ingrédients de ladite pâte au moyen d'un dispositif de mélange selon l'une quelconque des revendications 1 à 18, puis de pétrir ladite pâte qui est évacuée du dispositif.

19. Procédé de fabrication selon la revendication 18, **caractérisé en ce que** la pâte évacuée du dispositif de mélange est recueillie préalablement à son pétrissage.

20. Procédé de fabrication selon la revendication 18, **caractérisé en ce que** la pâte évacuée du dispositif de mélange est pétrie en continu.

21. Installation pour la mise en oeuvre du procédé selon la revendication 20, comprenant un dispositif de mélange selon l'une quelconque des revendications 1 à 18, et une cuve de pétrissage (32) dans laquelle sont disposés des outils de pétrissage (33), ladite cuve comprenant un orifice amont (34) d'alimentation du mélange à pétrir qui est en communication avec, ou disposé en regard de, l'orifice d'évacuation (15), et un orifice aval (35) de sortie de la pâte pétrie, ladite cuve étant agencée pour, lors de l'alimentation en continu de la cuve (32) avec le mélange évacuée du dispositif de mélange, permettre le déplacement de la pâte dans la cuve (32) depuis l'orifice amont (34) vers l'orifice aval (35).

22. Installation selon la revendication 21, **caractérisée en ce que** l'orifice d'alimentation (34) est prévu sur la partie supérieure de la cuve (32), l'orifice de sortie (35) étant situé sur une face latérale de ladite cuve.

## Claims

1. A device for continuously mixing the ingredients of a flour- and water-based dough, said device comprising an enclosure (1) defining a mixing space (11) having a circular cross-section with a radius R, in which one mixing tool (2) comprising at least one radial arm (18), is rotatively mounted about an axis (A), and powered means (3) driving into rotation said tool in a mixing direction, the enclosure (1) comprising at least the following three types of openings:
- an inlet (14a) for feeding the space (11) with solid ingredients
- an inlet (14b) for feeding the space (11) with liquid ingredients
- a discharge outlet (15) for the mixed dough, said opening being provided in the side part of the periphery of the mixing space (11), **characterized in that** the arm (18) is inclined frontwards, with respect to the mixing direction, so as to have a dough-entry surface, the normal of which is oriented towards the bottom of the mixing space (11).

2. A mixing device according to claim 1, **characterized in that** the feeding inlets (14) are provided on the upper wall (5) of the enclosure (1), the solid ingredients inlet (14a) being substantially coaxial with the tool rotation axis (A) and the liquid inlet (14b) being radially offset with respect to said axis.

3. A mixing device according to claim 2, **characterized in that** the liquid inlet (14b) is provided at a distance from the rotation axis (A) which is comprised between 40% and 60% of the radius R of the mixing space (11).

4. A mixing device according to any one of claims 1 to 3, **characterized in that** the liquid inlet (14b) is positioned in front of the discharge outlet (15) with respect to the mixing direction.

5. A mixing device according to any one of claims 1 to 3, **characterized in that** the liquid inlet (14b) is provided with a nozzle (30) which is arranged so as to allow the introduction of a liquid into the mixing space (11), along a substantially solid cone.

6. A mixing device according to any one of claims 1 to 5, **characterized in that** the discharge outlet (15) is provided with a duct (31) which is so arranged as to form an angle comprised between 0° and 90°, with respect to a radius of the mixing space (11).

7. A mixing device according to claim 6, **characterized in that** the angle is substantially equal to 0°, so as to provide a radial discharge of the mixed dough.

8. A mixing device according to claim 6, **characterized in that** the angle is substantially equal to 90°, so as to provide a tangential discharge of the mixed dough.

9. A mixing device according to any one of claims 1 to 8, **characterized in that** the enclosure (1) comprises a bell (4) having a substantially cylindrical side inner edge (7) which is tightly associated with a support (9), the discharge outlet (15) being provided in the cylindrical edge.

10. A mixing device according to claim 9, **characterized in that** the support (9) has an upper surface which is substantially plane, opposite and away from which the tool (2b) is positioned.

11. A mixing device according to claim 10, **characterized in that** the distance between the lower end of the arm (18) and the support (9) is smaller than the distance between the radial end of the arm (18) and the cylindrical edge (7).

12. A mixing device according to any one of claims 1 to 11, **characterized in that** the length of the arm (18) of the tool (2) is comprised between 70% and 90% of the value of the radius of the mixing space (11).

13. A mixing device according to claim 1, **characterized in that** the angle between the normal of the dough-entry surface and the rotation axis (A) is of the order of 45°.

14. A mixing device according to any one of claims 1 to 13, **characterized in that** the tool (2b) includes a hub (16) for an association with the motor, three identical arms (18) extending radially from said hub, the arms (18) being equally distributed around the hub (16) with an angular deviation equal to 120°.

15. A mixing device according to claim 14, **characterized in that** each arm (18) comprises a U-shaped tube, both branches (20) of the U being associated with the hub (16) so that the upper branch (20) of the U is positioned in front of the lower branch (20) of the U, with respect to the mixing direction, the dough-entry surface being formed between said branches.

16. A mixing device according to any one of claims 1 to 15, **characterized in that** the enclosure (1) comprises at least one fluid circulation tank between an upstream port (12) and a downstream port (13), said ports being provided on the external wall (8) of said enclosure.

17. A mixing device according to any one of claims 1 to 16, **characterized in that** at least one inlet/outlet (14,15) is provided with a valve.

18. A method for manufacturing a flour- and water-based dough, said method providing the continuous mixing of the ingredients of said dough using a mixing device according to any one of claims 1 to 18, then the kneading of said dough which is discharged from the device.

19. A manufacturing method according to claim 18, **characterized in that** the dough discharged from the mixing device is collected prior to being kneaded.

20. A manufacturing method according to claim 18, **characterized in that** the dough discharged from the mixing device is continuously kneaded.

21. An equipment for the implementation of the method according to claim 20, comprising a mixing device according to any one of claims 1 to 18, and a kneading vessel (32) wherein kneading tools (33) are arranged, said vessel comprising an upstream inlet (34) for feeding the mixture to be kneaded which communicates with or which is positioned opposite the discharge outlet (15), and a downstream kneaded dough outlet (35), said vessel being so arranged as to allow the displacement of the dough in the vessel (32) from the upstream inlet (34) to the downstream outlet (35), during the continuous feeding of the vessel (32) with the mixture discharged from the mixing device.

22. An equipment according to claim 21, **characterized in that** the feeding inlet (34) is provided on the upper part of the vessel (32), the outlet (35) being located on a side face of said vessel.

## Patentansprüche

1. Vorrichtung für das kontinuierliche Mischen der Bestandteile einer Teigware auf der Grundlage von Mehl und Wasser, wobei die besagte Vorrichtung eine Umschließung (1) umfaßt, die einen Mischraum (11) beschreibt und einen kreisförmigen Querschnitt mit Radius R aufweist, in dem ein Mischwerkzeug (2), das mindestens einen radialen Arm (18) umfaßt, um eine Achse (A) drehend montiert ist, und Antriebsmittel (3), die das besagte Werkzeug in einer Mischrichtung in Drehung versetzen, wobei die Umschließung (1) mindestens die drei nachstehenden Arten von Öffnungen umfaßt:
- Eine Öffnung für die Versorgung (14a) des Raums (11) mit festen Bestandteilen;
- Eine Öffnung für die Versorgung (14b) des Raums (11) mit Flüssigkeit;
- Eine Öffnung zur Entleerung (15) des gemischten Teigs, wobei die besagte Öffnung im seitlichen Teil der Peripherie des Mischraums (11) vorgesehen ist, **dadurch gekennzeichnet, daß** der Arm (18) gegenüber der Mischrichtung nach vorne geneigt ist, so daß eine Stirnseite des Teigs präsentiert wird, deren Normalwert zum Boden des Mischraums (11) ausgerichtet ist;

2. Mischvorrichtung nach Anspruch 1, **dadurch gekennzeichnet, daß** die Versorgungsöffnungen (14) an der oberen Wand (5) der Umschließung (1) vorgesehen sind, wobei die Versorgungsöffnung für feste Bestandteile (14a) deutlich koaxial zur Drehachse (A) des Werkzeugs ist und die Versorgungsöffnung für Flüssigkeiten (14b) gegenüber der besagten Achse exzentrisch radial liegt.

3. Mischvorrichtung nach Anspruch 2, **dadurch gekennzeichnet, daß** die Versorgungsöffnung für Flüssigkeit(14b) in einer Entfernung der Drehachse (A) vorgesehen ist, die bei zwischen 40% und 60% des Radius R des Mischraums (11) liegt.

4. Mischvorrichtung nach einem beliebigen der vorstehenden Ansprüche 1 bis 3, **dadurch gekennzeichnet, daß** die Versorgungsöffnung für Flüssigkeit (14b) im Verhältnis zur Mischrichtung vor der Entleerungsöffnung (15) angeordnet ist.

5. Mischvorrichtung nach einem beliebigen der vorstehenden Ansprüche 1 bis 4, **dadurch gekennzeichnet, daß** die Versorgungsöffnung für Flüssigkeit (14b) mit einer Düse (30) versehen ist, die so gestaltet ist, daß die Einführung der Flüssigkeit in den Mischraum (11) nach einem deutlich massiven Kegel möglich wird.

6. Mischvorrichtung nach einem beliebigen der vorstehenden Ansprüche 1 bis 5, **dadurch gekennzeichnet, daß** die Entleerungsöffnung (15) mit einer Leitung (31) versehen ist, die so gestaltet ist, daß ein Winkel von zwischen 0° und 90° gegenüber einem Radius des Mischraums (11) gebildet wird.

7. Mischvorrichtung nach Anspruch 6, **dadurch gekennzeichnet, daß** der Winkel deutlich gleich 0° beträgt, so daß eine radiale Entleerung des gemischten Teigs sichergestellt wird.

8. Mischvorrichtung nach Anspruch 6, **dadurch gekennzeichnet, daß** der Winkel deutlich gleich 90° beträgt, so daß eine tangentiale Entleerung des gemischten Teigs sichergestellt wird.

9. Mischvorrichtung nach einem beliebigen der vorstehenden Ansprüche 1 bis 8, **dadurch gekennzeichnet, daß** die Umschließung (1) eine Glocke (4) mit innerer seitlicher deutlich zylinderförmiger Kante (7) umfaßt, die dicht auf einem Träger (9) verbunden ist, wobei die Entleerungsöffnung (15) in der zylinderförmigen Kante (7) ausgeführt ist.

10. Mischvorrichtung nach Anspruch 9, **dadurch gekennzeichnet, daß** der Träger (9) eine obere Fläche aufweist, die deutlich eben ist, der gegenüber und in deren Entfernung das Werkzeug (2) angeordnet ist.

11. Mischvorrichtung nach Anspruch 10, **dadurch gekennzeichnet, daß** die Entfernung zwischen dem unteren Ende des Arms (18) und dem Träger (9) geringer als die Entfernung zwischen dem radialen Ende des Arms (18) und der zylinderförmigen Kante (7) ist.

12. Mischvorrichtung nach einem beliebigen der vorstehenden Ansprüche 1 bis 11, **dadurch gekennzeichnet, daß** die Länge des Arms (18) des Werkzeugs (2) zwischen 70% und 90% des Werts des Radius des Mischraums (11) ausmacht.

13. Mischvorrichtung nach Anspruch 1, **dadurch gekennzeichnet, daß** der Winkel zwischen dem Normalwert der Stirnseite und der Drehachse (A) bei 45° liegt.

14. Mischvorrichtung nach einem beliebigen der vorstehenden Ansprüche 1 bis 13, **dadurch gekennzeichnet, daß** das Werkzeug (2) eine Nabe (16) zur Verbindung zum Motor umfaßt, wobei sich drei identische Arme (18) ab der besagten Nabe radial erstrecken, wobei die Arme (18) im gleichen Abstand um die Nabe (16) herum mit einem Winkelabstand von gleich 120° angeordnet sind.

15. Mischvorrichtung nach Anspruch 14, **dadurch gekennzeichnet, daß** jeder Arm (18) ein Rohr in U-Form umfaßt, wobei die beiden Zweige (20) des U an der Nabe (16) befestigt sind, so daß der obere Zweig (20) des U gegenüber der Mischrichtung vor dem unteren Zweig (20) des U angeordnet ist, wobei die Stirnseite des Teigs zwischen den besagten Zweigen gebildet wird.

16. Mischvorrichtung nach einem beliebigen der vorstehenden Ansprüche 1 bis 15, **dadurch gekennzeichnet, daß** die Umschließung (1) mindestens eine Kammer für die Zirkulation einer Flüssigkeit zwischen einem oberen Port (12) und einem unteren Port (13) umfaßt, wobei die besagten Ports auf der Außenwand (8) der besagten Umschließung vorgesehen sind.

17. Mischvorrichtung nach einem beliebigen der vorstehenden Ansprüche 1 bis 16, **dadurch gekennzeichnet, daß** mindestens eine Öffnung (14, 15) mit einem Schieber versehen ist.

18. Verfahren zur Herstellung einer Teigware auf der Grundlage von Mehl und Wasser, wobei in dem besagten Verfahren vorgesehen ist, daß die Bestandteile des besagten Teigs vermittels einer Mischvorrichtung nach einem beliebigen der vorstehenden Ansprüche 1 bis 18 kontinuierlich gemischt werden, und daß der besagte aus der Vorrichtung entleerte Teig dann geknetet wird.

19. Verfahren zur Herstellung nach Anspruch 18, **dadurch gekennzeichnet, daß** der aus der Mischvorrichtung entleerte Teig vor seinem Kneten aufgefangen wird.

20. Verfahren zur Herstellung nach Anspruch 18, **dadurch gekennzeichnet, daß** der aus der Mischvorrichtung entleerte Teig kontinuierlich geknetet wird.

21. Anlage für den Einsatz des Verfahrens nach Anspruch 20, die eine Mischvorrichtung nach einem der beliebigen Ansprüche 1 bis 18 umfaßt und eine Knetwanne (32), in der Knetwerkzeuge (33) angeordnet sind, wobei die besagte Wanne eine obere Öffnung (34) für die Versorgung der zu knetenden Mischung umfaßt, die in Verbindung mit der Entleerungsöffnung (15) steht oder gegenüber der Entleerungsöffnung (15) angeordnet ist, und einer unteren Ausgangsöffnung (35) für den gekneteten Teig, wobei die besagte Wanne so gestaltet ist, daß sie bei der kontinuierlichen Versorgung der Wanne (32) mit der von der Mischvorrichtung entleerten Mischung die Bewegung des Teigs in der Wanne (32) ab der oberen Öffnung (34) zur unteren Öffnung (35) ermöglicht.

22. Anlage nach Anspruch 21, **dadurch gekennzeichnet, daß** die Versorgungsöffnung (34) auf dem oberen Teil der Wanne (32) vorgesehen ist, wobei sich die Ausgangsöffnung (35) auf einer Seitenfläche der besagten Wanne befindet.
